# EUROPEAN PATENT APPLICATION

(11) **EP 4 831 987 A1**
(43) Date of publication of application: **28.10.2026**
(21) Application number: 24906371.0
(22) Date of filing: 17.12.2024
(51) Int. Cl.: G10L 15/22

(54) **VOICE INTERACTION METHOD AND APPARATUS**

(30) Priority: 19.12.2023 CN 202311756133
(71) Applicant: Beijing Co Wheels Technology Co., Ltd, Beijing 101300 (CN)
(72) Inventor: FENG, Gaofeng, Beijing 101300 (CN); GOU, Xiaofei, Beijing 101300 (CN)
(74) Representative: Maiwald GmbH
(86) International application number: PCT/CN2024/140120
(87) International publication number: WO 2025/130892

(57) **Abstract**

The present application proposes a voice interaction method, system, and apparatus. The voice interaction method comprises: identifying at least one first instruction, and obtaining at least one first user intention, each first user intention corresponding to one target service; and when a second instruction is received, determining a target service corresponding to the second instruction by matching the second instruction with the at least one first user intention, and executing the second instruction by using the target service corresponding to the second instruction. In this way, in the scenario of processing a plurality of multi-round conversations, on the basis of at least one received first instruction, if a second instruction continues to be received, the second instruction can be matched with at least one first user intention of the at least one first instruction, so that the second instruction is automatically matched to a proper target service for execution, thereby achieving voice intention distribution in a full-vehicle and full-time interaction, and improving the flexibility of human-computer interaction.

## Description

### CROSS-REFERENCE TO RELATED APPLICATIONS

This application claims priority to the Chinese patent application filed with the China National Intellectual Property Administration on December 19, 2023, with application No. 202311756133.7 and titled "Voice interaction method and apparatus", the entire contents of which are incorporated herein by reference.

### TECHNICAL FIELD

The present disclosure relates to the field of data processing, and specifically to a voice interaction method and an apparatus.

### BACKGROUND

Current in-vehicle voice has developed to the capability of whole-vehicle, full-time, and multi-person interaction, that is, instructions may be issued by voice at any time and any position (multi-zone) in a vehicle, and a plurality of people may participate in the same dialog. In the scenario of whole-vehicle, full-time, and multi-person interaction, voice instruction data including intents needs to be delivered to a suitable service executor to execute instructions. For example, a driver says "Navigate home", a front passenger says "I want to listen to crosstalk", and a rear seat passenger says "I want to watch a movie". After these instructions are identified, corresponding service executors need to be found to execute them. However, in the voice interaction methods of the related art, when processing instructions of multi-turn dialogues, processing of a voice instruction of a subsequent multi-turn dialogue can only be started after a voice instruction of a multi-turn dialogue is completely processed. For example, the related art needs to finish processing the instruction "Navigate home" from the driver before continuing to process the instruction "I want to listen to crosstalk" from the front passenger. If voice instructions of a plurality of multi-turn dialogue are processed simultaneously, different service executors in the multi-turn dialogues are prone to be confused, and it is impossible to distribute voice instructions including different intents received in the plurality of multi-turn dialogue to suitable service executors for execution.

### SUMMARY

The present disclosure provides a voice interaction method and an apparatus, an electronic device, a storage medium, and a program product.

According to a first aspect of the present disclosure, a voice interaction method is provided, including: obtaining at least one first user intent by identifying at least one first instruction, in which a first user intent corresponds to a target service; and in a case that a second instruction is received, determining a target service corresponding to the second instruction by matching the second instruction with the at least one first user intent, and executing the second instruction by using the target service corresponding to the second instruction.

In some embodiments, the first user intent corresponds to a registration scenario, the registration scenario includes the target service, and determining the target service corresponding to the second instruction by matching the second instruction with the at least one first user intent includes: identifying a second user intent corresponding to the second instruction; determining a target registration scenario corresponding to the second user intent by matching the second user intent with at least one registration scenario; and determining the target service corresponding to the target registration scenario as the target service corresponding to the second instruction.

In some embodiments, obtaining the at least one first user intent by identifying the at least one first instruction includes: in response to obtaining a plurality of user intents by identifying a first instruction, and outputting first prompt information; and obtaining selection information input by a user based on the first prompt information, and determining, according to the selection information, a first user intent corresponding to the first instruction from the plurality of user intents, so as to obtain the at least one first user intent based on the at least one first instruction.

In some embodiments, the method further includes: before determining the target service corresponding to the second instruction by matching the second instruction with the at least one first user intent, matching the first user intent with registration intents of a plurality of services to obtain a matching result, and determining a target service corresponding to the first user intent according to matching result, in which the target service is configured to execute at least one instruction corresponding to the first user intent; and in response to determining that a preset condition is satisfied by performing the target service, obtaining a registration scenario corresponding to the first user intent by performing scenario registration according to the first user intent, so as to obtain at least one registration scenario based on the at least one first user intent, in which the at least one registration scenario is configured for matching with the second instruction.

In some embodiments, the registration scenario includes: an intent type, a scenario identifier (ID), and a corresponding relationship between the scenario ID and the target service; and the preset condition includes that a user intent is intent feature data of a preset type, in which the preset type includes at least one of dialogue interaction or data information acquisition.

In some embodiments, matching the first user intent with the registration intents of the plurality of services to obtain the matching result, and determining the target service corresponding to the first user intent according to the matching result includes: matching the registration intents of the plurality of services with the first user intent; in response to registration intents of two or more services among the plurality of services being matched with the first user intent, outputting second prompt information, in which the second prompt information is configured to guide a user to select at least one service from the two or more services; and obtaining reply information input by the user based on the second prompt information, determining a corresponding service according to a reply intent of the reply information, and determining the corresponding service as the target service corresponding to the first user intent.

In some embodiments, the method further includes: before matching the first user intent with the registration intents of the plurality of services to obtain the matching result, obtaining an intent corresponding to a service according to functions and business scenarios of the plurality of services; and obtaining the registration intents of the plurality of services by registering at least one intent for a service among the plurality of services respectively.

In some embodiments, the registration scenario further includes scenario parameter information, and obtaining the registration scenario corresponding to the first user intent by performing the scenario registration according to the first user intent includes: obtaining an intent type, in which the intent type is determined according to an instruction intent expected to be received in the registration scenario; generating a scenario ID corresponding to the first user intent; establishing a corresponding relationship between the scenario ID and the target service; and determining, by the target service, the scenario parameter information according to the first user intent, in which the scenario parameter information includes one or more of: display device information, an ID indicating receive generative artificial intelligence (AI) data needed to be received, a participant whitelist, and a registration time.

In some embodiments, the second user intent includes intent feature data with a preset type of dialogue interaction, and determining the target registration scenario corresponding to the second user intent by matching the second user intent with the at least one registration scenario includes: matching the intent feature data with a preset type of the dialogue interaction with an intent type corresponding to the at least one registration scenario to obtain an intent matching result; and determining the target registration scenario from the at least one registration scenario according to the intent matching result.

In some embodiments, determining the target registration scenario from the at least one registration scenario according to the intent matching result includes: in a case where the intent feature data with a preset type of the dialogue interaction matches intent types corresponding to two or more registration scenarios among the at least one registration scenario, obtaining new parameter information corresponding to the intent feature data with a preset type of the dialogue interaction; matching the new parameter information with scenario parameter information of the two or more registration scenarios to determine a parameter information matching result; and determining the target registration scenario from the two or more registration scenarios according to the parameter information matching result.

In some embodiments, the second user intent includes intent feature data with a preset type of data information acquisition; data information includes generative AI data, the generative AI data is obtained by processing, using a large AI model, the first user intent and a scenario ID corresponding to the first user intent, in which the generative AI data is bound to the scenario ID corresponding to the first user intent, and determining the target registration scenario corresponding to the second user intent by matching the second user intent with the at least one registration scenario includes: matching a scenario ID corresponding to the second user intent with a scenario ID of the at least one registration scenario to obtain an ID matching result; and determining the target registration scenario according to the ID matching result.

In some embodiments, the method further includes: determining a display device corresponding to the registration scenario according to the scenario parameter information of the registration scenario; and deregistering the registration scenario in a preset deregistration situation, in which the preset deregistration situation includes at least one of: no intent feature data of a preset type matching the registration scenario is received for a preset duration, or a user turns off the display device corresponding to the registration scenario.

According to a second aspect of the present disclosure, a voice interaction apparatus is provided, including: an identification module, configured to obtain at least one first user intent by identifying at least one first instruction, in which a first user intent corresponds to a target service; a matching module, configured to, in a case that a second instruction is received, determine a target service corresponding to the second instruction by matching the second instruction with the at least one first user intent; and a distribution module, configured to execute the second instruction by using the target service corresponding to the second instruction.

According to a third aspect of the present disclosure, an electronic device is provided, including: at least one processor; and a memory communicatively connected to the at least one processor, in which the memory stores instructions executable by the at least one processor that, when executed by the at least one processor, cause the at least one processor to perform the voice interaction method of the first aspect.

According to a fourth aspect of the present disclosure, a non-transitory computer-readable storage medium for storing computer instructions is provided, in which the computer instructions are configured to cause a computer to perform the method of the first aspect.

According to a fifth aspect of the present disclosure, a computer program product is provided, including a computer program, in which the computer program, when executed by a processor, implements the method of the first aspect.

The voice interaction method provided by the embodiments of the present disclosure includes: obtaining the at least one first user intent by identifying the at least one first instruction, in which the first user intent corresponds to the target service; and in a case that the second instruction is received, determining the target service corresponding to the second instruction by matching the second instruction with the at least one first user intent, and executing the second instruction by using the target service corresponding to the second instruction. In the methods of the present disclosure, in a case that the second instruction is received, the second instruction may be matched with the at least one first user intent corresponding to the at least one first instruction that has been received. Since each first user intent corresponds to one target service, the target service adapted to the second instruction may be determined, and the second instruction is executed by using the target service adapted to the second instruction. Thus, in a scenario of processing a plurality of multi-turn dialogues, based on the at least one first instruction that has been received, if the second instruction is further received, the second instruction may be automatically matched to a suitable target service for execution by matching the second instruction with the at least one first user intent of the at least one first instruction, thus implementing voice intent distribution in whole-vehicle and full-time interaction and improving a flexibility of human-machine interaction.

It should be understood that, descriptions in summary of the disclosure are not intended to limit an essential or important feature in embodiments of the disclosure, and are also not construed to limit the scope of the disclosure. Other features of the disclosure will be easily understood by following descriptions.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

In order to clearly illustrate technical solutions of embodiments of the present disclosure or the related art, a brief description of drawings used in the description of the embodiments or the related art is given below. Obviously, the drawings in the following descriptions are only some embodiments of the present disclosure, and for those skilled in the art, other drawings may be obtained according to these drawings without creative labor.
FIG. 1 is a flowchart of a voice interaction method according to an embodiment of the present disclosure.
FIG. 2 is a flowchart of a voice interaction method according to an embodiment of the present disclosure.
FIG. 3 is a schematic diagram of a voice interaction system according to an embodiment of the present disclosure.
FIG. 4 is a flowchart of a voice interaction method according to an embodiment of the present disclosure.
FIG. 5 is a flowchart of a voice interaction method according to an embodiment of the present disclosure.
FIG. 6 is a schematic diagram of a voice interaction apparatus according to an embodiment of the present disclosure.
FIG. 7 is a block diagram of an electronic device 600 according to an embodiment of the present disclosure.

### DETAILED DESCRIPTION

Description will be made below to exemplary embodiments of the present disclosure with reference to accompanying drawings, which includes various details of embodiments of the present disclosure to facilitate understanding, and should be regarded as merely examples. Therefore, it should be recognized by the skilled in the art that various changes and modifications may be made to the embodiments described herein without departing from the scope and spirit of the present disclosure. Meanwhile, for clarity and conciseness, descriptions for well-known functions and structures are omitted in the following description.

Current in-vehicle voice has developed to the capability of whole-vehicle, full-time, multi-person interaction, that is, instructions may be issued by voice at any time and any position (multi-zone) in a vehicle, and a plurality of people may participate in the same dialogue. Voice instruction data including intents needs to be delivered to a suitable execution side to execute the instruction. As a large language model show obvious advantages in fields represented by intelligent question answering, introducing the large language model into the in-vehicle voice will be an inevitable trend.

The present disclosure provides a voice interaction system and a method, which introduce generative artificial intelligence (AI) into the in-vehicle voice, implement user intent distribution in whole-vehicle and full-time interaction, and accommodate the distribution of generative content of the large language model.

The following describes in detail a voice interaction method, an apparatus, an electronic device, a storage medium, and a program product provided in the present disclosure with reference to the accompanying drawings.

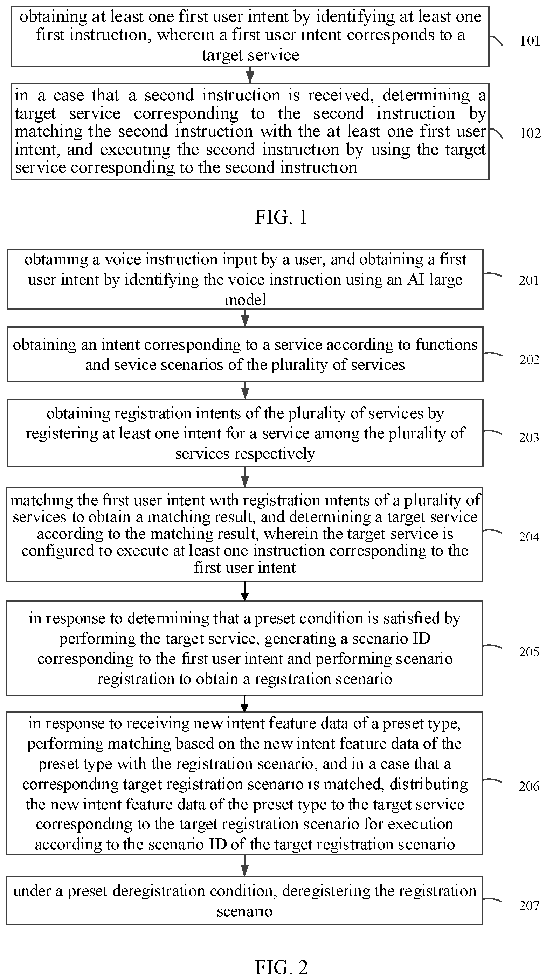

FIG. 1 shows a voice interaction method according to an embodiment of the present disclosure. The method is applied to a voice interaction system, and an execution entity of the method may be a processor. The processor may be, for example, a processor corresponding to a mobile device such as a mobile phone, a computer, or a tablet, a processor corresponding to a smart wearable device such as smart glasses or a smart watch, or a processor of a vehicle or other means of transportation, for example, a main control chip equipped in an vehicle-mounted system of a vehicle.

As shown in FIG. 1, the method includes the following steps at S101 to S102.

At S101, at least one first user intent is obtained by identifying at least one first instruction, in which a first user intent corresponds to a target service.

In the embodiments of the present disclosure, the at least one first instruction may include at least one voice instruction and/or text instruction input by the same user, or the at least one first instruction may include at least one voice instruction and/or text instruction input by different users at the same time or at different times, which is not specifically limited herein.

Semantic intent recognition is performed on each first instruction among the at least one first instruction to obtain a semantic intent corresponding to the first instruction as the first user intent corresponding to the first instruction, thus obtaining the at least one first user intent.

In some embodiments, the voice instruction input by the user may be acted as the first instruction, and the voice instruction is identified by an AI large model to obtain the first user intent.

In some embodiments of the present disclosure, the AI large model includes a large language model (LLM), chat generative pre-trained transformer (ChatGPT), a multimodal large model, and a multimodal cognitive large model, etc.

In embodiments of the present disclosure, the AI large model applied to voice recognition may handle various natural language tasks, such as text classification, question answering, dialogue, etc., which meets requirements of voice interaction in a plurality of scenarios, such as intelligent customer service, smart home, and autonomous driving.

In some embodiments, in addition to obtaining the first user intent by using the AI large model, for a scenario requiring reception of multi-turn voice instructions or dialogues, generative AI data may also be obtained by using the AI large model to implement intelligent question answering, where the generative AI data includes images, text, audio, etc.

For example, in whole-vehicle and full-time voice interaction, a front passenger says "I want to listen to crosstalk", and a rear seat passenger says "What is the difference between L8 and L9". After obtaining and processes the voice instructions, the AI large model may obtain corresponding first user intents, such as an intent to play crosstalk, a dialogue intent, etc. For the front passenger's intent of playing crosstalk, prompt information "Which one do you want to listen to" is generated to guide the user to select a specific playback target. For the rear passenger's query "What is the difference between L8 and L9", corresponding dialogue information such as "The difference between L8 and L9 is ..." is generated to implement intelligent question answering.

In embodiments of the present disclosure, each first user intent corresponds to one target service, and the target service is configured to execute at least one instruction corresponding to the first user intent.

In some embodiments, the first user intent may be matched with registration intents of a plurality of services to obtain a matching result, and the target service corresponding to the first user intent is determined according to the matching result.

In some embodiments, after a voice instruction is understood by the AI large model, a corresponding service needs to be found for execution. This is achieved by matching the first user intent with the registration intents of the plurality of services, and distributing the first user intent to the target service adapted thereto.

In some embodiments, in an in-vehicle voice interaction scenario, for example, a driver says "Navigate home", a front passenger says "I want to listen to crosstalk", and a rear seat passenger says "What is the difference between L8 and L9". After these voice instructions are understood by the AI large model, corresponding services need to be found for execution. For the driver's instruction, a navigation application is needed to execute the intent of navigating home; for the front passenger's instruction, a media application is needed to execute the intent of playing crosstalk; and for the rear seat passenger's instruction, a service processing unit is needed to receive a dialogue text or voice reply generated by the AI large model and present the dialogue text or voice reply to the rear seat passenger.

At S102, in a case that a second instruction is received, a target service corresponding to the second instruction is determined by matching the second instruction with the at least one first user intent, and the second instruction is executed by using the target service corresponding to the second instruction.

In some embodiments, in a case that the second instruction is received, the second instruction is matched with the at least one first user intent. The first instruction corresponding to the first user intent matched by the second instruction and the second instruction belong to the multi-turn dialogue under the same intent, and need to be executed by the same target service. Therefore, the target service corresponding to the first user intent matched by the second instruction may be determined as the target service corresponding to the second instruction, and the second instruction is executed by using the target service corresponding to the second instruction.

In some embodiments, a second user intent corresponding to the second instruction may be identified, a target first user intent corresponding to the second user intent is determined by matching the second user intent with the at least one first user intent. The target service corresponding to the target first user intent is determined as the target service corresponding to the second instruction.

In some embodiments, the second instruction may include a voice instruction and/or text instruction input by the user, or may include a data instruction including preset data information. Semantic intent recognition may be performed on the second instruction according to the AI large model to obtain the second user intent; or the second user intent corresponding to the second instruction may be identified according to data information included in the second instruction. For example, the second instruction may include reply content generated by the AI large model based on a first user intent for obtaining the data information, such as a user's inquiry intent. In a case that the second instruction includes specific data information, for example, includes generative AI data, it may be considered that the intent of the second instruction is to respond to a certain first user intent for obtaining the data information, and thus the second user intent corresponding to the second instruction may be determined as intent feature data with a preset type of data information acquisition.

In some embodiments, a registration scenario may be pre-generated for each first user intent, and the registration scenario includes the target service corresponding to the first user intent. In this case, the second user intent corresponding to the second instruction may be identified; a target registration scenario corresponding to the second user intent is determined by matching the second user intent with the at least one registration scenario; and the target service corresponding to the target registration scenario is determined as the target service corresponding to the second instruction.

In some examples, in response to determining that a preset condition is satisfied during execution of the target service corresponding to the first user intent, a registration scenario corresponding to the first user intent is obtained by performing registration according to the first user intent. The same processing is performed on at least one first user intent to obtain at least one registration scenario.

For example, in response to determining that the preset condition is satisfied, a scenario identifier (ID) corresponding to the first user intent may be generated, and a scenario registration is performed, so as to obtain the registration scenario corresponding to the first user intent. The registration scenario includes: an intent type corresponding to the scenario, the scenario ID, and a corresponding relationship between the scenario ID and the target service. The preset condition includes that the first user intent is intent feature data of a preset type, in which the preset type includes at least one of dialogue interaction or data information acquisition.

In some embodiments, a dialogue interaction type includes requiring to continuously receive the voice instruction from the user. For example, when the user says "I want to watch a movie", a plurality of movies are searched, and a prompt will be sent to ask which movie the user prefers. At this time, instructions such as "The first one" and a movie name spoken by the user need to be received.

In some embodiments, obtaining data information type includes requiring to obtain relevant data information according to current intent feature data. For example, according to the question "What is the difference between L8 and L9", an answer "The difference between L8 and L9 is ..." is obtained; and according to an intent of "What does a corgi look like", an image of the corgi is obtained.

In some embodiments, after the first user intent is distributed to the target service, in the process of executing the first user intent by using the target service, whether the first user intent is intent feature data of the preset type may be determined by judging whether execution of the first user intent requires obtaining user's further intent and whether execution of the user intent requires receiving the generative AI data.

In some embodiments, an intent type corresponding to the scenario is determined according to an instruction intent expected to be received in the scenario.

For example, when the user says "I want to listen to crosstalk", the media service performs a search for crosstalk and obtains a plurality of results requiring user selection. The media service expects to receive instructions such as "The first one" and "Next page" from the user. In this case, the intent type corresponding to the registration scenario is a selection intent.

In some embodiments, the execution of the first user intent requires obtaining user's further intent. For example, when the execution of the first user intent requires the user to make a further selection, a scenario is registered for the first user intent, the scenario ID is generated, and the intent type corresponding to the scenario is generated.

For example, when the driver says "Navigate home", the driver's intent of navigating home is distributed to the navigation service, which displays a navigation route selection interface. The navigation needs to obtain the user's further intent, for example, which route the user intends to select. In this case, a scenario is registered for the driver's intent of navigating home, the scenario ID is generated, and the intent type corresponding to the scenario is generated. The scenario ID is bound to the navigation service.

In some embodiments, when the execution of the first user intent requires receiving the generative AI data, for example, when the execution of the first user intent requires obtaining dialogue information generated according to user's voice instruction, a scenario is registered for the first user intent, the scenario ID, the intent type of dialogue intent corresponding to the scenario, and an ID indicating that the generative AI data needs to be received, and the like are generated.

For example, for the rear seat passenger's intent "What is the difference between L8 and L9", the rear seat passenger's dialogue intent is distributed to a dialogue service. In this case, it is necessary to receive content generated according to the rear seat passenger's question, for example, generating "The difference between L8 and L9 is ...". In this case, a scenario is registered for this intent, and the scenario ID is bound to the dialogue service.

In this embodiment, in response to receiving the second instruction, the second user intent corresponding to the second instruction is obtained by performing intent recognition on the second instruction. Here, the second user intent may include intent feature data of the preset type. Based on matching the second user intent with the registration scenario, in a case where a corresponding target registration scenario is matched, the second instruction is distributed, according to the scenario ID of the target registration scenario, to the target service corresponding to the target registration scenario for execution.

In some embodiments, for a multi-turn dialogue scenario, based on the at least one first user intent, such as the intent feature data with a preset type of the dialogue interaction and/or the intent feature data with a preset type of the data information acquisition, at least one registration scenario is registered. In a case that the second instruction is received, if the second user intent of the second instruction includes new intent feature data with a preset type of the dialogue interaction and/or new intent feature data with a preset type of the data information acquisition, scenario matching is performed on the second user intent, for example, a new user intent is received in a multi-turn voice instruction and/or generative AI data is obtained.

In some embodiments, when a new user intent is received, such as the second user intent corresponding to the second instruction, the new user intent is matched with the at least one registration scenario to determine a target registration scenario that the new user intent matches among the at least one registration scenario, so that the new user intent may be distributed to the target service corresponding to the target registration scenario, thus implementing distribution of user intents in the whole-vehicle and full-time interaction.

For example, for the execution of the driver's intent "Navigate home", the navigation displays a plurality of routes and asks the user which route to select. The front passenger says "I want to watch a movie", and the media displays a plurality of movies in this case and asks the user which one to watch. Since both executions require obtaining user's further intent, scenarios are registered for them respectively to obtain scenario 1 and scenario 2. If a new intent "I want to watch movie A" is received at this time, this user intent is matched with scenario 1 and scenario 2, and a matching result shows that this user intent has a highest matching degree with scenario 2, so the user intent is distributed to a media service corresponding to scenario 2.

In some embodiments, when the execution of the first user intent requires receiving the generative AI data, a scenario is registered for the first user intent, and the scenario ID is generated. The first user intent and a corresponding scenario ID are sent to the AI large model for processing to obtain the generative AI data, and the generative AI data is bound to the scenario ID corresponding to the first user intent. Thus, in response to receiving the generative AI data, a corresponding registration scenario is matched according to the bound scenario ID, and the generative AI data is distributed to the target service corresponding to the registration scenario.

For example, for the execution of the rear seat passenger's intent "What is the difference between L8 and L9", a dialogue question and answer needs to be performed. The dialogue service registers a scenario for this user intent, generates a scenario ID, and sends "The difference between L8 and L9" and a corresponding scenario ID to ChatGPT for processing to generate a content such as "The difference between L8 and L9 is ...". This generative content is bound together with the scenario ID corresponding to the question "What is the difference between L8 and L9". Thus, when the generative content is received, the corresponding registration scenario may be matched according to the bound scenario ID, and the generative content is distributed to the dialogue service corresponding to the registration scenario.

In summary, according to the embodiments of the present disclosure, in a case that the second instruction is received, the second instruction may be matched with the at least one first user intent corresponding to the at least one first instruction that is received. Since each first user intent corresponds to one target service, the target service adapted to the second instruction may be determined, and the second instruction is executed by using the target service adapted to the second instruction. Thus, in a scenario of processing a plurality of multi-turn dialogues, based on the at least one first instruction that is received, if the second instruction is further received, the second instruction may be automatically matched to a suitable target service for execution by matching the second instruction with the at least one first user intent of the at least one first instruction, thus implementing voice intent distribution in the whole-vehicle and full-time interaction and improving the flexibility of human-machine interaction. The method of the present disclosure may be implemented by introducing an AI large model into voice interaction, and distributes the user intent and the generative AI data to suitable executors for execution based on the scenario registration, which not only satisfies the voice intent distribution in the whole-vehicle and full-time interaction but also solves the distribution problem of generative content of the large model.

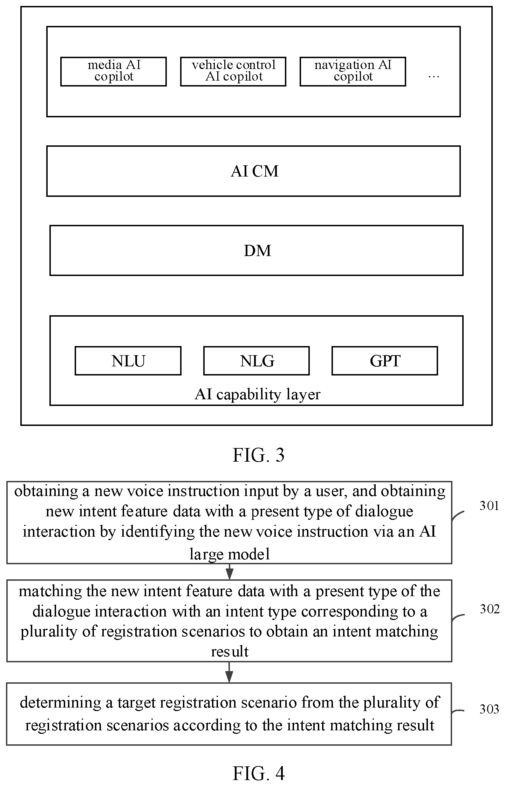

Based on the embodiment shown in FIG. 1, FIG. 2 is a flowchart of a voice interaction method according to an embodiment of the present disclosure. The method may be applied to a voice interaction system shown in FIG. 3. As an example, the voice interaction system may be run, for example, in a vehicle-mounted system of the vehicle.

The method includes the following steps S201 to S207.

At S201, a voice instruction input by a user is obtained, and a first user intent is obtained by identifying the voice instruction using an AI large model.

Here, the voice instruction input by the user is used as a first instruction, and the first user intent corresponding to the first instruction is obtained by identifying the voice instruction using the AI large model.

In some embodiments, for the first instruction of at least one first instruction, in response to obtaining a plurality of user intents by identifying the first instruction, first prompt information is output. Selection information input by the user based on the first prompt information is obtained, and the first user intent corresponding to the first instruction is determined, according to the selection information, from the plurality of user intents. Thus, the at least one first user intent may be obtained based on the at least one first instruction.

In some embodiments, in the voice interaction system shown in FIG. 3, an AI capability layer identifies and processes the voice instruction issued by the user to obtain the user intent. The AI capability layer provides AI capabilities including natural language understanding (NLU), natural language generation (NLG), and generative AI.

In some embodiments, the first instruction includes: a single-sentence voice instruction. In response to obtaining a plurality of user intents by identifying the single-sentence voice instruction, the first prompt information is output, in which the first prompt information is configured to guide the user to select at least one user intent from the plurality of user intents. Selection information input by the user is obtained, and a single user intent corresponding to the voice instruction is determined from the plurality of user intents according to the selection information, where the single user intent is taken as the first user intent corresponding to the first instruction.

In some embodiments, as shown in FIG. 3, semantic arbitration processing is performed on the plurality of user intents corresponding to the voice instruction by the dialogue management (DM) of the voice interaction system to determine a single user intent of the voice instruction. After determination, the intent is transmitted to an AI copilot management (hereinafter referred to as CM), and the CM distributes the intent to an AI copilot (or called AI assistant) of the target service.

For example, when the user says "I want to see the sky", there may be a plurality of intents, for example, a vehicle control intent to open the sunroof, and a movie search intent (i.e., the movie titled "Sky"). In this case, the DM may ask the user whether to open the sunroof or watch the movie. If it is determined that the first user intent is to open the sunroof.

At S202, an intent corresponding to a service is obtained according to functions and service scenarios of the plurality of services.

At S203, registration intents of the plurality of services are obtained by registering at least one intent for a service among the plurality of services respectively.

In some embodiments, the voice interaction system shown in FIG. 3 includes an AI copilot layer, and the AI copilot layer includes a plurality of artificial intelligence copilots (hereinafter referred to as AI copilots). For example, AI copilots include a media AI copilot, a vehicle control AI copilot, a navigation AI copilot, etc. as shown in FIG. 3. Each AI copilot corresponds to a service. For example, for a navigation service, a navigation AI copilot manages one or more navigation applications to execute user navigation-related intents, such as the intent of "Navigate home". For a media service, a media AI copilot manages one or more media applications to execute user media-related intents, such as the intent of "Play a movie". In addition, a vehicle control AI copilot, a general dialogue AI copilot, etc. are also included.

In some embodiments, when an application is started, a corresponding intent is registered for an AI copilot responsible for the application. For example, when a media application is started, intents related to media search and playback control, such as "Play music", "I want to watch a movie", "I want to listen to crosstalk", "Fast forward 30 seconds", are registered for the media AI copilot. For the vehicle control AI copilot, intents such as "Open the trunk", "Turn on the reading light", "Turn on the seat massage" are registered. Other AI copilots are similar and will not be repeated.

At S204, the first user intent is matched with registration intents of a plurality of services to obtain a matching result, and a target service is determined according to the matching result, in which the target service is configured to execute at least one instruction corresponding to the first user intent.

In some embodiments, for each first user intent of the at least one first user intent, the first user intent may be matched with the registration intents of the plurality of services to obtain the matching result, and the target service corresponding to the first user intent is determined according to the matching result.

In some embodiments, matching the first user intent with the registration intents of the plurality of services to obtain the matching result, and determining the target service corresponding to the first user intent according to the matching result includes: matching the registration intents of the plurality of services with the first user intent; in response to registration intents of two or more services among the plurality of services being matched with the first user intent, outputting second prompt information, in which the second prompt information is configured to guide a user to select at least one service from the two or more services; and obtaining reply information input by the user based on the second prompt information, determining a corresponding service according to a reply intent of the reply information, and determining the corresponding service as the target service corresponding to the first user intent.

That is, when matching the first user intent with the registration intents of the plurality of services, if the registration intents of two or more services among the plurality of services match the first user intent, the second prompt information is output. According to the response information input by the user based on the second prompt information, the service corresponding to the first user intent may be determined as the target service corresponding to the first user intent.

It needs to be noted that the plurality of services may correspond to one registration intent, one user intent corresponds to one target service, and one target service may correspond to one or more user intents.

In some embodiments, as applied to the voice interaction system shown in FIG. 3, when a plurality of AI copilots register the same intent and the user triggers the intent, the CM arbitrates the intent and asks the user which AI copilot to use for execution.

For example, when the user says "I want to watch a movie", if video application 1 and video application 2 each serve as an AI copilot and register an intent for video search, the CM may ask the user which application to use for searching. It needs to be noted that in other implementations, there may also be a case where one media AI copilot manages all media applications, which is not limited by the present disclosure.

At S205, in response to determining that a preset condition is satisfied by performing the target service, a scenario ID corresponding to the first user intent is generated, and scenario registration is performed to obtain a registration scenario.

The registration scenario includes: an intent type corresponding to the scenario, a scenario ID, and a corresponding relationship between the scenario ID and the target service. The preset condition includes that the first user intent is intent feature data of a preset type, in which the preset type includes at least one of dialogue interaction or data information acquisition.

In some embodiments of the present disclosure, after the generative AI is introduced into the whole-vehicle and full-time voice interaction, distributing the user's voice instruction to the target service for execution includes three situations: first, the instruction is directly executed and an execution result is returned; second, the instruction requires a further instruction from the user, including a scenario supporting a multi-turn dialogue; third, an AI generative content needs to be received, including a scenario supporting intelligent question answering. In the latter two situations, a scenario is registered for the intent corresponding to the user's voice instruction.

In some embodiments of the present disclosure, when the execution of the first user intent requires receiving the user's further intent and/or requires receiving the AI generative content, the scenario ID corresponding to the first user intent is generated and the scenario registration is performed.

In some embodiments, the registration scenario further includes scenario parameter information, and obtaining the registration scenario corresponding to the first user intent by performing the scenario registration according to the first user intent includes: obtaining an intent type; generating a scenario ID corresponding to the first user intent; establishing a corresponding relationship between the scenario ID and the target service; and determining, by the target service, the scenario parameter information according to the first user intent, in which the scenario parameter information includes one or more of: display device information corresponding to the scenario, an ID indicating generative AI data needed to be received, a participant whitelist, and a registration time. The intent type is determined according to the instruction intent expected to be received in the registration scenario.

In some embodiments, the registration scenario is usually accompanied by a UI display, that is, associated with an in-vehicle screen.

In some embodiments, a generation rule of the scenario ID is, for example: "sceneid"-ScreenId-timestamp-6-digit random number. Each field sequentially represents an ID header, a screen corresponding to the scenario, a timestamp, and a random number. In addition, other parameters may also be defined to achieve specific purposes. For example, the following parameters may be defined: an intent whitelist including an intent that the AI copilot expects to receive at the moment, screen information including a screen corresponding to the scenario, a participant whitelist including whether the scenario is a multi-person scenario, i.e., whether to receive instructions from other people, screen information including the screen corresponding to the scenario, a parameter indicating that the scenario needs to receive the generative AI data, etc.

In some embodiments, when applied to the voice interaction system shown in FIG. 3, if the AI copilot needs to dynamically receive the intent or receive the generative AI data, the scenario registration is performed, a scenario ID is generated, a relationship between the scenario ID and the AI copilot is recorded in the CM, and scenario information is transmitted to the DM.

For example, when the user says "I want to listen to crosstalk", the media AI copilot performs a search for crosstalk and obtains a plurality of results for the user to select. Then the AI copilot displays the searched media resources and broadcasts "There are a plurality of results, which one do you want to listen to". The AI copilot expects to receive a user instruction such as "The first one" or "Next page". Then the AI copilot performs the scenario registration, generates the scenario ID such as B, and the intent whitelist including the intent that the AI copilot expects to receive at this moment, such as "The first one", "Next page", etc. The relationship between scenario B and the media AI copilot is recorded in the CM, and the scenario information is transmitted to the DM.

For example, when the user says "Compare L8 and L9", this intent is distributed to a general dialogue AI copilot. In this case, it is expected that the AI copilot receives an intelligent answer generated for this question. The general dialogue AI copilot then performs the scenario registration, generates the scenario ID such as C, and parameter information indicating that the generative AI data needs to be received in this scenario. The relationship between scenario C and the general dialogue AI copilot is recorded in the CM, and the scenario information is transmitted to the DM.

At S206, in response to receiving new intent feature data of a preset type, the new intent feature data of the preset type is matched with the registration scenario; and in a case that a corresponding target registration scenario is matched, the new intent feature data of the preset type is distributed to the target service corresponding to the target registration scenario for execution according to the scenario ID of the target registration scenario.

In some embodiments, in response to receiving the new intent feature data with the preset type of dialogue interaction and/or in response to receiving the new intent feature data with the preset type of data information acquisition, scenario matching is performed. For example, a new user intent is received in a multi-turn voice instruction and/or generative AI data is obtained.

In some embodiments, in the scenario shown in FIG. 3, when the AI copilot performs the scenario registration, the CM is responsible for generating the scenario ID. The relationship between the scenario ID and the AI copilot is recorded in the CM, and the scenario information is transmitted to the DM. When there is the new user intent or artificial intelligence generated content (AIGC) related to the scenario, the DM is responsible for associating the new user intent or the generative AI data with the scenario ID and then transmitted them to the CM. The CM then routes the new user intent or the generative AI data to the AI copilot that registers the scenario according to the scenario ID.

In some embodiments, the second user intent includes intent feature data with a preset type of dialogue interaction, and determining the target registration scenario corresponding to the second user intent by matching the second user intent with the at least one registration scenario includes: matching the intent feature data with a preset type of the dialogue interaction with an intent type corresponding to the at least one registration scenario to obtain an intent matching result; and determining the target registration scenario from the at least one registration scenario according to the intent matching result.

In some embodiments, as shown in FIG. 4, the process of matching the new intent feature data with the preset type with the registration scenario in response to receiving the new intent feature data with the preset type of the dialogue interaction includes steps at S301 to S303.

At S301, a new voice instruction input by a user is obtained, and new intent feature data with a preset type of dialogue interaction is obtained by identifying the new voice instruction via an AI large model.

Here, the new voice instruction input by the user is equivalent to the second instruction. The new intent feature data with a preset type of the dialogue interaction is equivalent to the second user intent.

At S302, the new intent feature data with a preset type of the dialogue interaction is matched with an intent type corresponding to a plurality of registration scenarios to obtain an intent matching result.

In some embodiments, when the driver says "Navigate home", the navigation AI copilot displays a navigation route selection interface and prompts "Which route do you want to choose", with a registration scenario ID of A and an intent list being a selection intent. When the front passenger says "I want to watch a movie", the media AI copilot pops up a movie resource card, prompts "Multiple results found, which one do you want to watch", with a registration scenario ID of B and an intent list being a selection intent. If the driver then says "The first one", the voice instruction is processed to obtain a new intent, which is the selection intent. By intent matching, it may be seen that the intent matches intent lists of registration scenario A and registration scenario B.

At S303, a target registration scenario is determined from the plurality of registration scenarios according to the intent matching result.

In some embodiments, determining the target registration scenario from the at least one registration scenario according to the intent matching result includes: in a case where the new intent feature data with a preset type of the dialogue interaction matches intent types corresponding to two or more registration scenarios among the at least one registration scenario, obtaining parameter information corresponding to the new intent feature data with a preset type of the dialogue interaction; matching the parameter information of the new intent feature data with a preset type of the dialogue interaction with scenario parameter information of the two or more registration scenarios to obtain a parameter information matching result; and determining the target registration scenario from the two or more registration scenarios according to the parameter information matching result.

In some embodiments, the parameter information of the new intent feature data with a preset type of the dialogue interaction includes a sound zone or a user corresponding to a source of the voice instruction, and the sound zone includes zones of a driver, a front passenger, a rear seat passenger, etc.

In some embodiments, in a case that intent whitelists corresponding to a plurality of scenarios include the same intent and the user triggers the intent, the DM performs scenario arbitration on the plurality of scenarios, selects one of the scenarios, associates the intent with a scenario ID of the scenario, and transmitted the intent associated with the scenario ID to the CM, and then the CM delivers the intent associated with the scenario ID to the AI copilot that registers the scenario.

In some embodiments, the DM performs the scenario arbitration according to scenario parameters, including performing the scenario arbitration according to one or more of: screen information, a participant whitelist, or a registration time.

In some embodiments, according to the participant whitelist, it may be determined whether a registration scenario is a multi-person scenario. If the registration scenario is the multi-person scenario, instructions from other people may be received. It is determined whether the registration scenario matches based on the participant whitelist, as well as the sound zone or user corresponding to the source of the voice instruction of the new intent feature data with a preset type of the dialogue interaction.

For example, when the driver says "Navigate home", the navigation AI copilot displays a navigation route selection interface and prompts "Which route do you want to choose", with a registration scenario ID of A and an intent list being a selection intent. When the front passenger says "I want to watch a movie", the media AI copilot pops up a movie resource card, and a text-to-speech (TTS) prompts "There are a plurality of results, which one do you want to watch", with a registration scenario ID of B and an intent list also being the selection intent. At this time, the rear seat passenger says "The first one". According to the intent matching result, both registration scenario A and B are matched. If registration scenario A is not a multi-person scenario and registration scenario B is a multi-person scenario, the selection intent "The first one" is delivered to the media AI copilot corresponding to registration scenario B, and the operation of selecting the first movie to play is executed.

In some embodiments, the screen information includes a screen associated with the scenario and a sound zone where the screen is located. The sound zone includes a driver, a front passenger, a rear seat passenger, etc. It is determined whether the sound zone corresponding to the source of the voice instruction of the new intent feature data with a preset type of the dialogue interaction is the same as the sound zone where the screen associated with the registration scenario is located. If the sound zones are in the same sound zone, the registration scenario is determined as the target registration scenario.

For example, when the driver says "Navigate home", the navigation AI copilot displays a navigation route selection interface and prompts "Which route do you want to choose", with a registration scenario ID of A and an intent list being a selection intent. When the rear seat says "I want to watch a movie", the media AI copilot pops up a movie resource card, and a TTS prompts "There are a plurality of results, which one do you want to watch", with a registration scenario ID of B and an intent list also being the selection intent. At this time, the driver says "The first one". According to the intent matching result, both registration scenario A and B are matched. If a screen associated with registration scenario A is in the driver's sound zone and a screen associated with registration scenario B is in the sound zone of rear seat, the selection intent "The first one" is delivered to the navigation AI copilot corresponding to scenario A, and the operation of selecting the first route is executed to start navigation, so as to complete instruction execution.

In some embodiments, if the new user intent matches the intent types corresponding to the two or more registration scenarios among the plurality of registration scenarios, according to a registration time of the registration scenario, the registration scenario with an earlier registration time is determined as the target registration scenario.

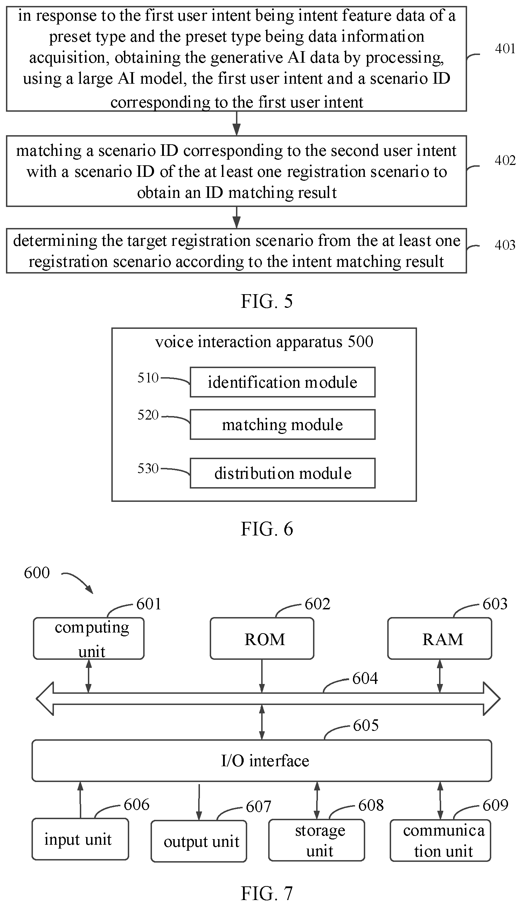

In some embodiments, the first user intent includes intent feature data with a preset type of data information acquisition; data information includes generative AI data. The second user intent includes intent feature data with a preset type of data information acquisition. The distribution of the generative AI data may be implemented by processing the first user intent and the second user intent via a process as shown in FIG. 5, including steps at S401 to S403.

At S401, in response to the first user intent being intent feature data of a preset type and the preset type being data information acquisition, the generative AI data is obtained by processing, using a large AI model, the first user intent and a scenario ID corresponding to the first user intent, in which the generative AI data is bound to the scenario ID corresponding to the first user intent.

For example, based on FIG. 3, in response to the first user intent being the intent feature data of the preset type and the preset type being the data information acquisition, the DM generates a request for obtaining the data information based on the scenario ID transmitted by the CM and the first user intent, and transmits the request to the AI large model. The AI large model obtains the generative AI data by processing the first user intent and the scenario ID corresponding to the first user intent, and sends the generative AI data bound with the scenario ID to the DM. Alternatively, the generative AI data may be obtained by processing the first user intent via the AI large model, and sent to the DM as reply content or response information of the request for obtaining the data information. The DM binds the generative AI data with the scenario ID.

At S402, a scenario ID corresponding to the second user intent is matched with a scenario ID of the at least one registration scenario to obtain an ID matching result.

After the AI large model obtain the generative AI data by processing the first user intent and the scenario ID corresponding to the first user intent, the generative AI data bound with the scenario ID corresponding to the first user intent is returned as a second instruction. In a case that the second instruction including the generative AI data and the scenario ID is received, it is determined that the second user intent includes the intent feature data with a preset type of the data information acquisition. The scenario ID corresponding to the second user intent is matched with the scenario ID of the at least one registration scenario to obtain the ID matching result.

At S403, the target registration scenario is determined from the at least one registration scenario according to the intent matching result.

Based on the above process, it may be understood that the scenario ID corresponding to the second user intent and the scenario ID corresponding to the first user intent are the same scenario ID. Therefore, according to the ID matching result, the target registration scenario may be determined from the at least one registration scenario.

In some embodiments, in the voice interaction system shown in FIG. 3, the rear seat passenger says "Compare L8 and L9", and the generative AI data needs to be received. The general dialogue AI copilot registers a scenario ID C for this intent, and sends the intent and the registration scenario ID to GPT for processing to generate comparison information between L8 and L9. The comparison information is marked as AI data associated with scenario ID C at the DM. If a current registration scenario includes scenario A corresponding to the navigation AI copilot, scenario B corresponding to the media AI copilot, and scenario C corresponding to the general dialogue AI copilot, the AI data will be distributed by the CM to the general dialogue AI copilot in accordance with the marked scenario ID C.

At S207, under a preset deregistration condition, the registration scenario is deregistered.

The preset deregistration condition includes at least one of: no intent feature data of a preset type matching the registration scenario is received for a preset duration, or a user turns off a display device corresponding to the registration scenario.

In some embodiments, the display device corresponding to the registration scenario is determined according to scenario parameter information of the registration scenario.

In some embodiments, when the AI copilot does not receive an AI layer processing result, that is, including the new user intent and/or the generative AI data, within a preset duration, and when the user turns off the display device corresponding to the registration scenario, scenario deregistration may be performed. For example, when the user says "I want to watch a movie", the screen displays a user interface (UI), showing searched movie resources, and asks the user which one to watch. At this time, if the user does not issue a subsequent instruction for a long time, the UI disappears, or the user directly turns off the UI, the AI copilot deregisters the scenario.

In summary, according to the embodiments of the present disclosure, by distributing AI capabilities based on scenarios, whole-vehicle, full-time, and multi-person interaction of in-vehicle voice is implemented, and at the same time, the distribution of generative content of the large model is supported.

Corresponding to the above voice interaction method, the present disclosure also provides a voice interaction apparatus. FIG. 6 is a block diagram of a voice interaction apparatus 500 according to the embodiments of the present disclosure. As shown in FIG. 6, the apparatus includes: an identification module 510, configured to obtain at least one first user intent by identifying at least one first instruction, in which a first user intent corresponds to a target service; a matching module 520, configured to, in a case that a second instruction is received, determine a target service corresponding to the second instruction by matching the second instruction with the at least one first user intent; and a distribution module 530, configured to execute the second instruction by using the target service corresponding to the second instruction.

In some embodiments, the matching module 520 is further configured to: identify a second user intent corresponding to the second instruction; determine a target registration scenario corresponding to the second user intent by matching the second user intent with at least one registration scenario; and determine the target service corresponding to the target registration scenario as the target service corresponding to the second instruction.

In some embodiments, the identification module 510 is further configured to, in response to obtaining a plurality of user intents by identifying a first instruction, and output first prompt information; and obtain selection information input by a user based on the first prompt information, and determine, according to the selection information, a first user intent corresponding to the first instruction from the plurality of user intents, so as to obtain the at least one first user intent based on the at least one first instruction.

In some embodiments, the apparatus further includes a registration module, configured to, before determining the target service corresponding to the second instruction by matching the second instruction with the at least one first user intent, match the first user intent with registration intents of a plurality of services to obtain a matching result, and determine a target service corresponding to the first user intent according to the matching result, in which the target service is configured to execute at least one instruction corresponding to the first user intent; and in response to determining that a preset condition is satisfied by performing the target service, obtain a registration scenario corresponding to the first user intent by performing scenario registration according to the first user intent, so as to obtain at least one registration scenario based on the at least one first user intent, in which the at least one registration scenario is configured for matching with the second instruction.

In some embodiments, the registration scenario includes: an intent type, a scenario ID, and a corresponding relationship between the scenario ID and the target service; and the preset condition includes that a user intent is intent feature data of a preset type, in which the preset type includes at least one of dialogue interaction or data information acquisition.

In some embodiments, the matching module 520 is further configured to match the registration intents of the plurality of services with the first user intent; in response to registration intents of two or more services among the plurality of services being matched with the first user intent, output second prompt information, in which the second prompt information is configured to guide a user to select at least one service from the two or more services; and obtain reply information input by the user based on the second prompt information, determine a corresponding service according to a reply intent of the reply information, and determine the corresponding service as the target service corresponding to the first user intent.

In some embodiments, the registration module is further configured to, before matching the first user intent with the registration intents of the plurality of services to obtain the matching result, obtain an intent corresponding to a service according to functions and business scenarios of the plurality of services; and obtain the registration intents of the plurality of services by registering at least one intent for a service among the plurality of services respectively.

In some embodiments, the registration module is further configured to obtain an intent type, in which the intent type is determined according to an instruction intent expected to be received in the registration scenario; generate a scenario ID corresponding to the first user intent; establish a corresponding relationship between the scenario ID and the target service; and determine, by the target service, the scenario parameter information according to the first user intent, in which the scenario parameter information includes one or more of: display device information, an ID indicating a need to receive generative AI data, a participant whitelist, and a registration time.

In some embodiments, the second user intent includes intent feature data with a preset type of dialogue interaction, and the matching module 520 is further configured to match the intent feature data with a preset type of the dialogue interaction with an intent type corresponding to the at least one registration scenario to obtain an intent matching result; and determine the target registration scenario from the at least one registration scenario according to the intent matching result.

In some embodiments, the matching module 520 is further configured to, in a case where the intent feature data with a preset type of the dialogue interaction matches intent types corresponding to two or more registration scenarios among the at least one registration scenario, obtain new parameter information corresponding to the intent feature data with a preset type of the dialogue interaction; match the new parameter information with scenario parameter information of the two or more registration scenarios to determine a parameter information matching result; and determine the target registration scenario from the two or more registration scenarios according to the parameter information matching result.

In some embodiments, the second user intent includes intent feature data with a preset type of data information acquisition; data information includes generative AI data, the generative AI data is obtained by processing, using a large AI model, the first user intent and a scenario ID corresponding to the first user intent, in which the generative AI data is bound to the scenario ID corresponding to the first user intent, and the matching module 520 is further configured to match a scenario ID corresponding to the second user intent with a scenario ID of the at least one registration scenario to obtain an ID matching result; and determine the target registration scenario according to the ID matching result.

In some embodiments, the apparatus further includes a deregistration module, configured to determine a display device corresponding to the registration scenario according to the scenario parameter information of the registration scenario; and deregister the registration scenario in a preset deregistration situation, in which the preset deregistration situation includes at least one of: no intent feature data of a preset type matching the registration scenario is received for a preset duration, or a user turns off the display device corresponding to the registration scenario.

In summary, according to the embodiments of the present disclosure, the apparatus, via the identification module, the matching module, the registration module, and the distribution module, distributes AI capabilities based on scenarios, whole-vehicle, full-time, and multi-person interaction of in-vehicle voice is implemented, and the distribution of generative content of the large model is supported.

It needs to be noted that, since the apparatus embodiments of the present disclosure correspond to the above method embodiments, the explanations of the method embodiments are also applicable to the apparatus embodiments, and the principles are the same. For details not disclosed in the apparatus embodiments, reference may be made to the above method embodiments, and will not be repeated in the present disclosure.

According to the embodiments of the present disclosure, the present disclosure also provides an electronic device, a readable storage medium, and a computer program product.

FIG. 7 is a block diagram of an example electronic device 600 that may be used to implement the embodiments of the present disclosure. The electronic device is intended to represent various types of digital computers, such as laptop computers, desktop computers, workstations, personal digital assistants, servers, blade servers, mainframe computers, and other suitable computers. The electronic device may also represent various types of mobile devices, such as personal digital assistants, cellular phones, smart phones, wearable devices, and other similar computing devices. The components shown herein, their connections and relations, and their functions are merely examples, which are not intended to limit the implementations of the disclosure described and/or required herein.

As shown in FIG. 7, the device 600 includes a computing unit 601, configured to execute various appropriate actions and processes according to a computer program stored in a read-only memory (ROM) 602 or a computer program loaded from a storage unit 608 to a random access memory (RAM) 603. The RAM 603 may store various programs and data required for an operation of the device 600. The computing unit 601, the ROM 602 and the RAM 603 may be connected with each other via buses 604. An input/output (I/O) interface 605 is also connected to the bus 604.

The plurality of components in the device 600 are connected to the I/O interface 605, including: an input unit 606, for example, a keyboard, a mouse, etc.; an output unit 607, for example, various types of displays, speakers, etc.; a storage unit 608, for example, a magnetic disk, an optical disk, etc.; and a communication unit 609, for example, a network card, a modem, a wireless voice interactive transceiver, etc. The communication unit 609 allows the device 600 to exchange information/data via a computer network such as Internet and/or various types of telecommunication networks with other devices.

The computing unit 601 may be various types of general and/or dedicated processing components with processing and computing abilities. Some examples of the computing unit 601 include but not limited to a central processing unit (CPU), a graphics processing unit (GPU), various dedicated AI computing chips, various computing units on which a machine learning model algorithm is running, a digital signal processor (DSP), and any appropriate processor, controller, microcontroller, etc. The computing unit 601 executes various methods and processes as described above, for example, a voice interaction method. For example, in some embodiments, the voice interaction method may be further implemented as a computer software program, which is tangibly included in a machine readable medium, such as the storage unit 608. In some embodiments, a part or all of the computer program may be loaded and/or installed on the device 600 via the ROM 602 and/or the communication unit 609. When the computer program is loaded on the RAM 603 and executed by the computing unit 601, one or more steps in the method may be performed as described above. Optionally, in other embodiments, the computing unit 601 may be configured to implement the voice interaction method in other appropriate ways (for example, by means of a firmware).

Various implementations of the systems and techniques described above may be implemented by one and/or a combination of a digital electronic circuit system, an integrated circuit system, a field-programmable gate array (FPGA), an application specific integrated circuit (ASIC), an application specific standard product (ASSP), a system on chip (SoC), a complex programmable logic device (CPLD), computer hardware, firmware, and software. These various embodiments may be implemented in one or more computer programs, in which the one or more computer programs may be executed and/or interpreted on a programmable system including at least one programmable processor. The programmable processor may be a dedicated or general programmable processor for receiving data and instructions from a storage system, at least one input device and at least one output device, and transmitting the data and the instructions to the storage system, the at least one input device and the at least one output device.

The program code configured to implement the method of the disclosure may be written in any combination of one or more programming languages. These program codes may be provided for processors or controllers of general-purpose computers, dedicated computers, or other programmable data processing devices, so that the program codes, when executed by the processors or the controllers, enable the functions/operations specified in the flowcharts and/or the block diagrams to be performed. The program code may be entirely executed on a machine, partly executed on a machine, partly executed on a machine and partly executed on a remote machine as an independent software package, or entirely executed on a remote machine or a server.

In the context of the disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, RAMs, ROMs, electrically programmable read-only memories (EPROMs), flash memories, fiber optics, compact disc read-only memories (CD-ROMs), optical storage devices, magnetic storage devices, or any suitable combination of the foregoing.

In order to provide interaction with the user, the systems and techniques described herein may be implemented on a computer having a display device (e.g., a cathode ray tube (CRT) or a liquid crystal display (LCD) monitor) for displaying information to the user; and a keyboard and a pointing device (such as a mouse or trackball) via which the user may provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or haptic input).

The systems and technologies described herein may be implemented in a computing system that includes background components (e.g., as a data server), or a computing system that includes middleware components (e.g., an application server), or a computing system that includes front-end components (e.g., a user computer with a graphical UI or a web browser, via which the user may interact with the implementations of the systems and technologies described herein), or may include any combination of the background components, the middleware components, and the front-end components. The components of the system may be interconnected by any form or medium of digital data communication (e.g., a voice interaction network). Examples of the voice interaction network include: a local area network (LAN), a wide area network (WAN), the Internet, and a blockchain network.

The computer system may include a client and a server. The client and the server are generally remote from each other and generally interact via the voice interaction network. The relationship between the client and the server is generated by computer programs operated on a corresponding computer and having a client-server relationship with each other. The server may be a cloud server, also known as a cloud computing server or a cloud host, which is a host product in a cloud computing service system, to solve difficult management and weak business scalability in the conventional physical host and virtual private server (VPS) services. The server may also be a server of the distributed system, or a server combined with the blockchain.

It needs to be noted that AI is a discipline that studies how to make computers simulate certain human thinking processes and intelligent behaviors (such as learning, reasoning, thinking, planning, etc.), and includes both hardware-level and software-level technologies. AI hardware technologies generally include sensors, dedicated AI chips, cloud computing, distributed storage, big data processing, etc. AI software technologies mainly include computer vision technology, speech recognition technology, natural language processing technology, and machine learning/deep learning, big data processing technology, knowledge graph technology, and other directions.

It may be understood that steps may be reordered, added or deleted using various forms of processes shown above. For example, each step described in the present disclosure may be executed in parallel, sequentially or in different orders, so long as a desired result of the technical solution disclosed in the present disclosure may be achieved, which is not limited herein.

The above specific embodiments do not constitute a limitation on the protection scope of the disclosure. Those skilled in the art should understand that various modifications, combinations, sub-combinations and substitutions may be made according to design requirements and other factors. Any modification, equivalent replacement and improvement made within the spirit and principle of the disclosure shall be included in the protection scope of the disclosure.

### INDUSTRIAL UTILITY

In the present disclosure, when a second instruction is received the received second instruction may be matched to a target service corresponding to a previously received first instruction for processing based on the matching of instruction intents. Thus, in a scenario where at least one first instruction is received and then the second instruction is received, the second instruction may be automatically matched to a suitable target service for execution, thus implementing voice intent distribution in whole-vehicle and full-time interaction and improving a flexibility of human-computer interaction.

## Claims

1. A voice interaction method, comprising:
obtaining at least one first user intent by identifying at least one first instruction, wherein a first user intent corresponds to a target service; and
in a case that a second instruction is received, determining a target service corresponding to the second instruction by matching the second instruction with the at least one first user intent, and executing the second instruction by using the target service corresponding to the second instruction.

2. The voice interaction method of claim 1, wherein the first user intent corresponds to a registration scenario, the registration scenario comprises the target service, and determining the target service corresponding to the second instruction by matching the second instruction with the at least one first user intent comprises:
identifying a second user intent corresponding to the second instruction;
determining a target registration scenario corresponding to the second user intent by matching the second user intent with at least one registration scenario; and
determining the target service corresponding to the target registration scenario as the target service corresponding to the second instruction.

3. The voice interaction method of claim 1 or 2, wherein obtaining the at least one first user intent by identifying the at least one first instruction comprises:
in response to obtaining a plurality of user intents by identifying a first instruction, and outputting first prompt information; and
obtaining selection information input by a user based on the first prompt information, and determining, according to the selection information, a first user intent corresponding to the first instruction from the plurality of user intents, so as to obtain the at least one first user intent based on the at least one first instruction.

4. The voice interaction method of any one of claims 1 to 3, wherein the method further comprises: before determining the target service corresponding to the second instruction by matching the second instruction with the at least one first user intent,
matching the first user intent with registration intents of a plurality of services to obtain a matching result, and determining a target service corresponding to the first user intent according to the matching result, wherein the target service is configured to execute at least one instruction corresponding to the first user intent; and
in response to determining that a preset condition is satisfied by performing the target service, obtaining a registration scenario corresponding to the first user intent by performing scenario registration according to the first user intent, so as to obtain at least one registration scenario based on the at least one first user intent, wherein the at least one registration scenario is configured for matching with the second instruction.

5. The voice interaction method of claim 4, wherein
the registration scenario comprises: an intent type, a scenario identifier (ID), and a corresponding relationship between the scenario ID and the target service; and
the preset condition comprises that a user intent is intent feature data of a preset type, wherein the preset type comprises at least one of dialogue interaction or data information acquisition.

6. The voice interaction method of claim 4 or 5, wherein matching the first user intent with the registration intents of the plurality of services to obtain the matching result, and determining the target service corresponding to the first user intent according to the matching result comprises:
matching the registration intents of the plurality of services with the first user intent;
in response to registration intents of two or more services among the plurality of services being matched with the first user intent, outputting second prompt information, wherein the second prompt information is configured to guide a user to select at least one service from the two or more services; and
obtaining reply information input by the user based on the second prompt information, determining a corresponding service according to a reply intent of the reply information, and determining the corresponding service as the target service corresponding to the first user intent.

7. The voice interaction method of any one of claims 4 to 6, wherein the method further comprises: before matching the first user intent with the registration intents of the plurality of services to obtain the matching result,
obtaining an intent corresponding to a service according to functions and business scenarios of the plurality of services; and
obtaining the registration intents of the plurality of services by registering at least one intent for a service among the plurality of services respectively.

8. The voice interaction method of any one of claims 4 to 7, wherein the registration scenario further comprises scenario parameter information, and obtaining the registration scenario corresponding to the first user intent by performing the scenario registration according to the first user intent comprises:
obtaining an intent type, wherein the intent type is determined according to an instruction intent expected to be received in the registration scenario;
generating a scenario ID corresponding to the first user intent;
establishing a corresponding relationship between the scenario ID and the target service;
and
determining, by the target service, the scenario parameter information according to the first user intent, wherein the scenario parameter information comprises one or more of: display device information, an ID indicating generative artificial intelligence (AI) data needed to be received, a participant whitelist, and a registration time.

9. The voice interaction method of any one of claims 2 to 8, wherein the second user intent comprises intent feature data with a preset type of dialogue interaction, and determining the target registration scenario corresponding to the second user intent by matching the second user intent with the at least one registration scenario comprises:
matching the intent feature data with a preset type of the dialogue interaction with an intent type corresponding to the at least one registration scenario to obtain an intent matching result; and
determining the target registration scenario from the at least one registration scenario according to the intent matching result.

10. The voice interaction method of claim 9, wherein determining the target registration scenario from the at least one registration scenario according to the intent matching result comprises:
in a case where the intent feature data with a preset type of the dialogue interaction matches intent types corresponding to two or more registration scenarios among the at least one registration scenario, obtaining new parameter information corresponding to the intent feature data with a preset type of the dialogue interaction;
matching the new parameter information with scenario parameter information of the two or more registration scenarios to determine a parameter information matching result; and
determining the target registration scenario from the two or more registration scenarios according to the parameter information matching result.

11. The voice interaction method of any one of claims 2 to 8, wherein the second user intent comprises intent feature data with a preset type of data information acquisition; data information comprises generative AI data, the generative AI data is obtained by processing, using a large AI model, the first user intent and a scenario ID corresponding to the first user intent, wherein the generative AI data is bound to the scenario ID corresponding to the first user intent, and determining the target registration scenario corresponding to the second user intent by matching the second user intent with the at least one registration scenario comprises:
matching a scenario ID corresponding to the second user intent with a scenario ID of the at least one registration scenario to obtain an ID matching result; and
determining the target registration scenario according to the ID matching result.

12. The voice interaction method of claim 8, further comprising:
determining a display device corresponding to the registration scenario according to the scenario parameter information of the registration scenario; and
deregistering the registration scenario in a preset deregistration situation, wherein the preset deregistration situation comprises at least one of: no intent feature data of a preset type matching the registration scenario is received for a preset duration, or a user turns off the display device corresponding to the registration scenario.

13. A voice interaction apparatus, comprising:
an identification module, configured to obtain at least one first user intent by identifying at least one first instruction, wherein a first user intent corresponds to a target service;
a matching module, configured to, in a case that a second instruction is received, determine a target service corresponding to the second instruction by matching the second instruction with the at least one first user intent; and
a distribution module, configured to execute the second instruction by using the target service corresponding to the second instruction.

14. An electronic device, comprising:
at least one processor; and
a memory communicatively connected to the at least one processor, wherein
the memory stores instructions executable by the at least one processor that, when executed by the at least one processor, cause the at least one processor to perform the voice interaction method of any one of claims 1 to 12.

15. A non-transitory computer-readable storage medium for storing computer instructions, wherein the computer instructions are configured to cause a computer to perform the voice interaction method of any one of claims 1 to 12.

16. A computer program product comprising a computer program, wherein the computer program, when executed by a processor, performs the voice interaction method of any one of claims 1 to 12.

17. A vehicle, comprising: the voice interaction apparatus of claim 13, or the electronic device of claim 14.
